# EUROPEAN PATENT SPECIFICATION

(11) **EP 4 276 344 B1**
(45) Date of publication and mention of the grant of the patent: **13.08.2025**
(21) Application number: 22172618.5
(22) Date of filing: 10.05.2022
(51) Int. Cl.: F16N 7/38, A22C 11/02

(54) **CLIPPING MACHINE LUBRICATING METHOD AND DEVICE**
CLIPMASCHINESCHMIERVERFAHREN UND -VORRICHTUNG
PROCÉDÉ ET DISPOSITIF DE LUBRIFICATION DE MACHINE D'AGRAFAGE

(43) Date of publication of application: 15.11.2023
(73) Proprietor: Poly-clip System GmbH & Co. KG, 65795 Hattersheim (DE)
(72) Inventor: Scheding, Markus, 65239 Hochheim (DE)
(74) Representative: Eisenführ Speiser

(56) References cited:
- US-A1- 2009 158 688
- US-A1- 2016 178 122
- US-A1- 2017 045 040
- US-A1- 2017 159 713
- US-A1- 2019 120 425
- US-A1- 2019 257 360
- PLOY-CLIP SYSTEM GMBH & CO. KG: "ICA 8700 Doppel-Clip-Automat", 1 March 2015 (2015-03-01), Internet, XP055280261, Retrieved from the Internet <URL:http://www.polyclip.com/konfigurator/m/pdfs/de/ICA 8700 - Poly-clip System (de).pdf> [retrieved on 20160614]
- UNKNOWN: "Snacking without hesitation - with PVDC-free sausage casing with ripping aid!", WWW.POLYCLIP.COM/EN/NEWS/PRODUCTS, 16 May 2019 (2019-05-16), www.polyclip.com/en/news/products, pages 1 - 2, XP093191804, Retrieved from the Internet <URL:https://www.polyclip.com/en/news/products/snacking-without-hesitation> [retrieved on 20240801]
- GHODAKE SAGAR ET AL: "Automation of Lubrication System", 31 December 2017 (2017-12-31), pages 1 - 4, XP093191881, Retrieved from the Internet <URL:https://www.ijariit.com/manuscripts/v3i2/V3I2-1341.pdf> [retrieved on 20240801]

## Description

The present invention relates to a clipping machine for producing sausage-shaped products by filling a filling material into a tubular or bag-shaped packaging casing, having at least one first drivable component, at least one drive device for driving said at least one first drivable component, a control unit for controlling the operation of said at least one drive device of said at least one first drivable component, and at least one sensor unit associated with the at least one first drivable component and coupled to the control unit. The clipping machine further comprises a lubricating device including a supply of lubricant and a pump unit, the lubricating device is connected to at least one first lubricating point of the at least one first drivable component of the clipping machine, by a lubricating pipe through which lubricant is delivered to the lubricating point by the pump unit.

In practice, packaging machines, like clipping machines, are known, for producing sausage-shaped products, like sausages, in which filling material is fed into a tubular or bag-shaped packaging casing which is stored on a filling tube, and which is closed at its front end by a closure means, like a closure clip, i.e. the end of the packaging casing pointing in the feeding direction of the filling material. After a predetermined portion of filling material has been fed into the tubular or bag-shaped packaging casing, the filled tubular or bag-shaped packaging casing is gathered by gathering means, a plait-like portion being at least substantially free from filling material is formed thereto, and a first closure clip is placed and closed on said plait-like portion by a clipping device, for closing the portion of the tubular or bag-shaped packaging casing just filled. Additionally, a second closure clip may be placed for closing the front end of the sausage-shaped product to be produced next. For severing the sausage-shaped product just produced from the remaining supply a tubular or bag-shaped packaging casing, a cutting device may be provided for cutting off the plait-like portion between the first and second closure clip. The sausage-shaped product just produced may then be discharged from the clipping machine by a discharge device, like a belt conveyor, for further treatment, like cooking or smoking.

Such clipping machines include one or more driveable components, like a clipping device or gathering means, which are driven separately or commonly by a respective drive device, like an electric motor or a pneumatic or hydraulic drive device. Said components include mechanical assemblies, like linear guidances or pivot arrangements, which include bearings or support surfaces being in sliding contact with respective counter surfaces. For preventing or minimizing wear and damages to said mechanical assemblies, a suitable lubricant is provided to the contact surfaces and counter surfaces or bearings. Clipping machines, and in particular said bearings, are provided with lubricating fittings, like lubricating nipples, via which lubricant may be fed to said bearings. Lubricating a clipping machine is usually executed in predefined intervals. Lubricant may be fed to the bearings manually and separately to each lubricating fitting. Alternatively, the lubricating fittings of a clipping machine may be connected via lubricating pipes to a central lubricating unit.

Manually lubricating each bearing of a clipping machine is time consuming. Moreover, in the case that one or more bearings, e.g. which are difficult to reach or which are not visible to an operator from a normal position, are not provided with enough lubricant, wear may excessively increase and the clipping machine or the respective component may thereof be damaged.

US 2019/0257360 A1 discloses a bearing lubrication application control system which comprises a digital controller device operably coupled to a lubrication meter and a computer readable medium reader. As such, during lubrication application, the digital controller device is configured for reading bearing data from bearing computer readable media associated with each bearing and also recording an applied lubrication volume for each of the bearings. For a subsequent lubrication application, the digital controller device is configured for calculating a dynamic lubrication schedule for each of the bearings wherein the schedule comprises at least an appropriate lubrication volume to be applied calculated at least according to the stored apply lubrication volume for each of the plurality of bearings.

Using a central lubricating unit being part of the machine and having a device, which can mechanically supply the corresponding components of the machine with lubricant, enables to lubricate each bearing. However, since the bearings of a clipping machine, dependent on the component, are differently loaded during the production process, the consumption of lubricant is also different. Furthermore, different kinds of bearings require different lubricant amounts. Additionally, linear guidances, which also have to be lubricated, may include open portions via which lubricant may leak, and which therefore may require more lubricant. Thus, even if said central lubricating unit lubricates all bearings, it may occur that some of said bearings do not receive enough lubricant. Otherwise, it is possible that other bearings, more than necessary, are provided with lubricant, and the redundant lubricant may leak, whereby the clipping machine and/or the products just produced may be contaminated.

A document titled "SNACKING WITHOUT HESITATION - WITH PVDC-FREE SAUSAGE CASING WITH RIPPING AID!" available under URL:https://www.polyclip.com/en/news/products/snacking-withouthesitation, discloses a TSCA 120/160 seal-clip machine of the related art, having a consumption-oriented central lubrication system.

It is an object of the present invention to overcome the above mentioned drawbacks and to provide a clipping machine with a reduced wear, and a respective method therefore.

According to the present invention, there is provided a clipping machine for producing sausage-shaped products by filling a filling material into a tubular or bag-shaped packaging casing, with the clipping machine having at least one first drivable component, at least one drive device for driving said at least one first drivable component, a control unit for controlling the operation of said at least one drive device of said at least one first drivable component, and at least one sensor unit associated with the at least one first drivable component and coupled to the control unit, wherein the first sensor unit is mounted to the drive device for indicating specific operating conditions of the at least one first drivable component by determining at least one specific condition of the drive device. The clipping machine further comprises a lubricating device including a supply of lubricant and a pump unit, the lubricating device is connected to the at least one first lubricating point of the at least one first drivable component of the clipping machine by a lubricating pipe through which lubricant is delivered to the lubricating point by the pump unit.

In the inventive clipping machine, the lubricating device is controlled by the control unit. The control unit is adapted to operate the lubricating device according to a predefined lubricating schedule for executing lubricating events to the component. The control unit is further adapted to vary the lubricating schedule upon a signal of the sensor unit indicating specific operating conditions of the component. As will be explained in more detail below, but not to be understood conclusively, the variation may relate to the starting time of the lubrication process and/or the duration of the lubrication process and/or the quantity of the lubricant and/or the temporal and/or quantitative course of the lubrication process and/or the type of lubricant.

Thereby, it is enabled to lubricate the at least one lubricating point in accordance with its specific load and the specific need of lubricant dependent on the specific operating conditions of the component indicated by said sensor unit. That means, in case of an increased load, a correspondingly increased amount of lubricant may be provided to said lubricating point. On the other hand, if said sensor unit indicates a decreasing load, the amount of lubricant may be reduced accordingly. Thereby, the total consumption of lubricant may be optimized, and the provision of sufficient lubricant so said lubricating point may be ensured.

Furthermore, providing sufficient lubricant to the lubricating point, particularly, in accordance with the load applied to said component or bearing, may reduce friction and wear, and thus, the amount of energy necessary for driving said component as well as the costs for energy may also be reduced.

Additionally, the provision of lubricating points with sufficient lubricant may prevent over lubrication as well as inadequate or deficient lubrication. Over lubrication may led to waste of lubricant and/or contamination of the products, e.g. by lubricant escaping from the lubricating points, whereas inadequate or deficient lubrication causes wear and premature failure of components or parts of the clipping machine, which also leads to additional cost resulting therefrom, and which may be prevented by the present invention.

A lubricating point in conjunction with the present disclosure means a bearing for supporting rotational or pivoting movement of elements, like axles or levers, or contact surfaces sliding along each other, like linear guidances, and which need to be lubricated for reducing friction and wear. A lubricating point is further provided with a lubricating fitting, like a lubricating nipple via which said lubricating point may be connected to the lubricating device by a respective lubricating pipe.

In a preferred embodiment of the inventive clipping machine, a lubricating schedule includes lubricating events in predefined intervals. The control unit is adapted to vary the length of at least one interval between two subsequent lubricating events. Thereby, the lubricating schedule may be adapted to the load actually applied to the drivable components of the clipping machine.

A variation of the lubricating schedule may include to shorten or to elongate the length between two subsequent lubricating events or to vary the intervals between all lubricating events scheduled. A variation of the lubricating schedule may further include to vary the amount of lubricant delivered during a lubrication event.

In a further preferred embodiment of the inventive clipping machine, the control unit is adapted to shorten the length of the interval between the previous lubricating event and the next lubricating event to be executed. Thereby, excessive friction and wear may immediately be reduced or omitted, e.g. in the case that the sensor unit indicates an increasing load, or in the case that a higher load is expected.

In the inventive clipping machine, it is of advantage that the control unit is adapted to analyse the signals received from the sensor unit, and to vary the lubricating schedule based on this analysis. In particular, based on an analysis of the signals of the sensor unit, the control unit may establish a detailed load profile, and a lubricating schedule may be designed, that considers the actually occurring load during the production process, whereby the consumption of lubricant may be optimized. Such an analysis can be executed in predefined intervals, e.g. daily at a defined time, or in conjunction with specific events, e.g. when changing the kind of products to be produced, or continuously. Such an analysis further enables to consider the status of the clipping machine or the respective components regarding maintenance or wear, and to adapt the lubricating schedule accordingly.

It is further of advantage that the control unit is adapted to switch to an alternative lubricating schedule. Switching to an alternative lubricating schedule may automatically be initialized, e.g. based on an analysis of the data received from the sensor unit. Alternatively, or additionally, switching to an alternative lubricating schedule may be done in adaption to the production process, like in adaption to the kind of products to be produced or the material used, like the tubular casing material or the filling material. This switching may be executed automatically, e.g. when selecting the kind of product to be produced, or individually by an operator that selects a specific lubricating schedule, e.g. from a list, in accordance with the kind of product to be produced, or in accordance with specific conditions of the clipping machine, like maintenance or wear conditions. The switching can also be the result of the aforesaid analysis.

A clipping machine may include only one drivable component or a number of drivable components. In the case that the clipping machine comprising at least a second drivable component having at least one second lubricating point coupled to the lubricating device by a lubricating pipe, and further at least a second sensor unit associated with the at least one second drivable component, it is advantageous that the control unit is adapted to vary the lubricating schedule of at least one or all drivable components, upon a signal one or all of the sensor units indicating specific operating conditions of said drivable components. That means, the signals of said sensor units, independently from each other, may cause a variation of the lubrication schedule for the lubricating points of said drivable components of the clipping machine. The variation of the lubricating schedule may be identical for the lubricating points of said drivable components. Alternatively, the signals of said sensor units may cause variations of the lubricating schedule, which are different for the lubricating points of the respectively different drivable components.

In a preferred embodiment of the clipping machine, at least one of the components of the clipping machine, has more than one lubricating point, and the lubricating points of the at least one of the drivable components have different lubricating schedules. This enables to select a specific lubricating schedule to nearly each lubricating point, e.g. in accordance with the individual load applied to the respective bearing.

In a further preferred embodiment of the inventive clipping machine, the lubricating point of the drivable components are arranged in groups, and the groups of lubricating points are lubricated according to different lubricating schedules. A group of lubricating points includes e.g. bearings to which similar or identical load is applied, and which need to be lubricated in identical intervals and with identical amounts of lubricant. Such grouping of lubricating points reduces the control amount for controlling the lubricating device.

For delivering lubricant to the lubricating points, a lubricant pump unit may be provided, which feeds lubricant through respective lubricant pipes to the lubricating points. For varying the intervals between two lubrication events or the amount of lubricant, the lubricant pump unit may be controlled accordingly. Alternatively or additionally, lubricant distributors may be provided, to which lubricant is fed by the lubricant pump. A lubricant distributor includes at least one, preferably more than one lubricant ports through which a respective amount of lubricant may be delivered to the lubricating points during one lubrication event. For varying the amount of lubricant supplied to the lubricating points, it the amount of lubricant delivered during one lubrication event by each lubricant port may be adjusted.

Further according to the present invention, there is provided a method for controlling a clipping machine for producing sausage-shaped products by filling a filling material into a tubular or bag-shaped packaging casing. The clipping machine has at least one first drivable component, at least one drive device for driving said at least one first drivable component, a control unit for controlling the operation of said at least one first drivable component, at least one sensor unit associated with the at least one component and coupled to the control unit, wherein the first sensor unit is mounted to the drive device for indicating specific operating conditions of the at least one first drivable component by determining at least one specific condition of the drive device, and a lubricating device including a supply of lubricant and a pump unit. The lubricating device is connected to at least one first lubricating point of the at least one first drivable component of the clipping machine by a lubricating pipe through which lubricant is delivered to the at least one first lubricating point by the pump unit. The method comprises the steps of controlling by the control unit the lubricating device, operating by the control unit the lubricating device according to a predefined lubricating schedule and varying by the control unit the lubricating schedule upon a signal of the sensor unit indicating specific operating conditions of the at least one first drivable component.

In the case that the lubricating schedule includes lubricating events in predefined intervals, the method further comprises the step of varying by the control unit the length of at least one interval between two subsequent lubricating events.

Alternatively, or additionally, the inventive method comprising the step of shorten by the control unit the length of the interval between the previous lubricating event and the next lubricating event to be executed.

Further according to the present invention, the method comprising the step of analysing by the control unit the signals received from the sensor device and varying the lubricating schedule on the basis of this analysis.

The inventive method may further comprise the step of switching by the control unit to an alternative lubricating schedule.

The clipping machine may further comprise at least a second drivable component with at least one second lubricating point coupled to the lubricating device by a lubricating pipe, and further at least a second sensor unit associated with the at least one second drivable component. In this case, the method further comprises the step of varying by the control unit the lubricating schedule of one or all components, upon a signal of one or all of the sensor units indicating specific operating conditions of said drivable components.

The lubricating point of the drivable components may be arranged in groups. Accordingly, the method may further comprise the step of lubricating the groups of lubricating points according to different lubricating schedules.

The inventive method for controlling a clipping machine thereby provides all advantages explained in conjunction with the clipping machine according to the present invention.

Further advantages and preferred embodiments of the present invention will be described in the following together with the drawings listed below. The expressions "left", "right", "below" and "above" used in the following description, are referred to the drawings in an alignment such that the reference numbers and the notation of the figures used can be read in normal orientation.
- Fig. 1:: is a schematic view showing the principal design of a clipping machine for producing sausage-shaped products;
- Fig. 2:: is a diagram of a first embodiment of a lubricating circuity of a clipping machine, according to the present invention;
- Fig. 3:: is a diagram of a second embodiment of a lubricating circuity of a clipping machine, according to the present invention;
- Fig. 4:: is a diagram of a third embodiment of a lubricating circuity of a clipping machine, according to the present invention; and
- Fig. 5:: is a diagram of a fourth embodiment of a lubricating circuity of a clipping machine, according to the present invention.

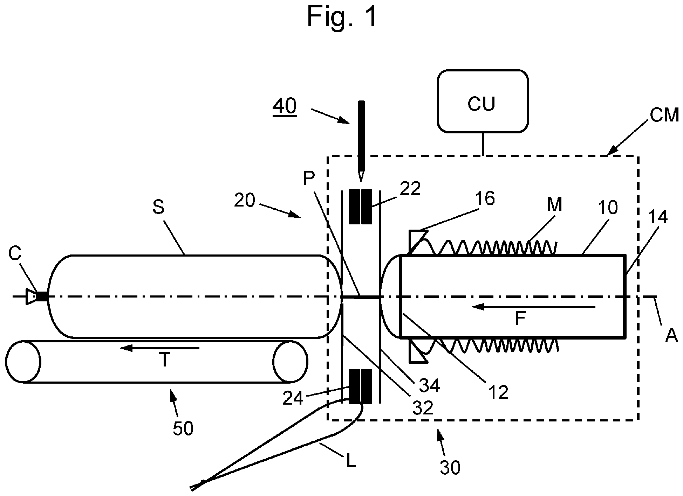

A clipping machine CM for producing sausage-shaped products S, like sausages, which contain a flowable filling material in a tubular or bag-shaped packaging casing M, is shown schematically in Fig. 1, in particular its closing region. Clipping machine CM comprises a filling tube 10 having a longitudinally and horizontally extending central axis A, with a discharge opening for discharging the filling material at its left end 12 and a feeding opening for feeding the filling material into filling tube 10 in a feeding direction F to the discharge opening of filling tube 10 at its right end 14. Moreover, a casing brake assembly 16 is arranged on and coaxially aligned with filling tube 10 in the region of left end 12 of filling tube 10. Filling tube 10 is made of a suitable material, like stainless steel.

A supply of tubular packaging casing M made of a thin sheet material is stored on filling tube 10 in a folded manner like a concertina. From the supply of tubular packaging casing M, tubular packaging casing M is pulled-off during the process of producing sausage-shaped products S, in particular by the feeding pressure for filling the filling material into tubular packaging casing M. Casing brake assembly 16 provides a braking force onto tubular packaging casing M being pulled off from filling tube 10, for allowing a controlled pulling-off of tubular packaging casing M during the filling process.

Clipping machine CM further comprises a clipping device 20 for closing a filled portion of tubular packaging casing M by applying closure means, like closure clips C, to a plait-like portion P, and gathering means 30 for gathering the filled tubular packaging casing M and forming said plait-like portion P thereto. These components are all arranged downstream filling tube 10.

As can be inferred from Fig. 1, clipping device 20 is positioned immediately downstream left end 12 of filling tube 10. Clipping device 20 comprises a first and a second clipping tool 22, 24 formed by a punch 22 and a die 24. It has to be noted that punch 22 and die 24 may apply and close a single closure clip C for closing just filled tubular packaging casing M, or may apply and close two closure clips C at the same time, a first closure clip C for closing the rear end of just filled tubular packaging casing M for forming a sausage-shaped product S, and a second closure clip C for closing the front end of a tubular packaging casing M subsequently to be filled.

Gathering means 30 include a first displacer unit 32 and a second displacer unit 34, wherein first displacer unit 32 is positioned downstream second displacer unit 34. First and second clipping tools 22, 24 of clipping device 20 may be positioned between first and second displacer units 32, 34, at least for applying and closing one or two closure clips C to plait-like portion P. First displacer unit 32 can reversibly be moved parallel to feeding direction F of the filling material, for forming a plait-like portion P of desired length.

If it is intended to store sausage-shaped products S on a rod-like element, like a smoking rod, e.g. for further processing like cooking or smoking, a suspension element L, like a suspension loop, may be provided and attached to one end of each of sausage-shaped products S, or at one end of a chain of sausage-shaped products. Suspension element L may be fed to one of closing tools 22, 24, and may be fixed to the respective end of sausage-shaped product S by means of closure clip C that closes said end of sausage-shaped product S.

For separating sausage-shaped product S just produced from the remaining supply of tubular packaging casing M stored on filling tube 10, a cutting device 40 may be provided. Said cutting device 40 cuts the tubular packaging casing M upstream closure clip C that closes the just filled portion of tubular packaging casing M. In case that two closure clips C have been applied to plait-like portion P by clipping device 20, cutting device 40 cuts plait-like portion P between said two closure clips C.

For discharging a sausage-shaped product S just produced from clipping machine CM in a transportation direction T being at least substantially the same as feeding direction F, a discharge device 50 is arranged downstream clipping device 20, which may be a belt conveyor comprising a conveyor belt and guide rollers.

For storing sausage-shaped products S on a rod-like element, like a smoking rod, suspension element L is caught by a catching device (not shown), like a catching needle, which guides suspension element L towards the rod-like element.

Clipping machine CM further comprises a control unit CU for controlling clipping machine CM, and one or more drive devices for driving the components of clipping machine CM, like e.g. first and second clipping tool 22, 24 of clipping device 20, first and second displacer unit 32, 34 of gathering means 30 and other components or assemblies of clipping machine CM, which include a drive unit, like discharge device 50. The one or more drive devices may be coupled to and controlled by control unit CU.

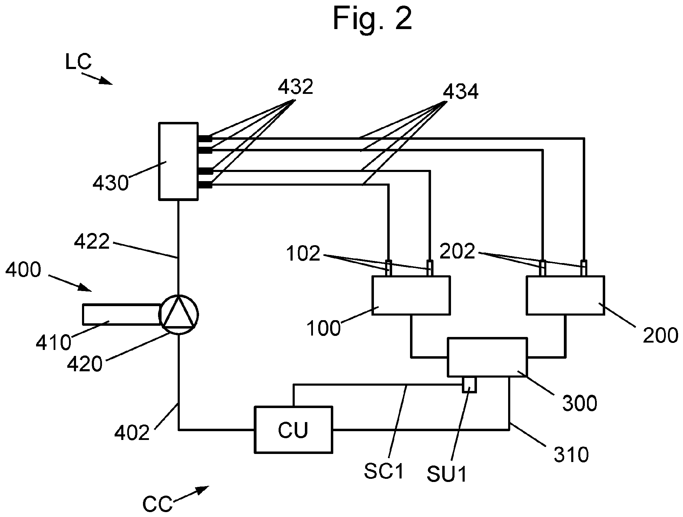

Fig. 2 is a diagram of a first embodiment of clipping machine CM including a lubrication circuity LC. Clipping machine CM according to Fig. 2 includes a first drivable component 100 and a second drivable component 200. First and second drivable components 100, 200 may represent clipping device 20 and gathering means 30, shown in Fig. 1.

First and second drivable components are commonly driven by a drive device 300, which may include an electric motor. Control unit CU is connected to drive device 300 for controlling drive device 300 via a control cable 310, and thus the movement of first and second drivable components 100, 200 is controlled by control unit CU. First and second drivable components 100, 200, drive device 300, control unit CU and control cable 310 forming control circuit CC of clipping machine CM.

Clipping machine CM according to Fig. 2 further has a lubrication circuit LC. Lubrication circuit LC includes a lubricating device 400 with a lubricant supply 410, a lubricant pump unit 420 or lubricant pump to which lubricant supply 410 is coupled, and a lubricant distributor 430 with four lubricant ports 432. Lubricant distributor 430 is connected to lubricant pump unit or lubricant pump 420 by a lubricant pipe 422. In the embodiment of Fig. 2, each drivable component 100, 200 of clipping machine CM is provided with two lubrication fittings 102; 202, which are connected to lubricant ports 432 of lubricant distributor 430 by lubricant delivery pipes 434.

Further according to the embodiment of clipping machine CM of Fig. 2, control unit CU is connected to lubricating device 400, and particularly, to lubricant pump 420 of lubricating device 400 via a control cable 402. A sensor unit SU1 is mounted to drive device 300, for indicating specific operating conditions of drivable components 100, 200 driven by drives device 300 and connected to control unit CU of clipping machine CM by a control cable SC1. Sensor unit SU1 includes a suitable sensor for determining at least one condition of drive device 300, like a Hall sensor, e.g. for detecting an increase or decrease in power consumption, or a torque transducer for detecting an increase or decrease of torque. Based on this specific condition of drive device 300, specific operating conditions of drivable components 100, 200 may be indicated, like increased wear or increased friction.

For producing a sausage-shaped product S on clipping machine CM, tubular packaging casing M stored on filling tube 10 and closed at its front end by at least one closure clip C, is filled with filling material which is fed through filling tube 10 into tubular packaging casing M in feeding direction F. Thereby, tubular packaging casing M is pulled off from filling tube 10 by the feeding pressure of the filling material. Casing brake assembly 16 exerts a braking force onto tubular packaging casing M while being pulled off from filling tube 10. After a predetermined portion of filling material is fed into tubular packaging casing M, upper and lower displacer elements of first and second displacer units 32, 34 are moved from their opened position into their closed position for forming a gathered portion to the filled tubular packaging casing M. Thereafter, first displacer unit 32 carries out a linear movement in a horizontal direction and coaxially to feeding direction F. Thereby, a plait-like portion P is formed to the gathered portion of tubular casing M, and two closure clips C are applied to plait-like portion P and closed by clipping device 20, a first closure clip C for closing the just filled tubular packaging casing M for forming a sausage-shaped product S and a second closure clip C for closing the front end of sausage-shaped product S subsequently to be produced. A suspension element L may be provided and attached to one end of sausage-shaped product S by means of one of closure clips C. For severing the just produced sausage-shaped product S from the remaining tubular packaging casing M, cutting device 40 is activated, such that plait-like portion P is cut between the two closure clips C, and the sausage-shaped product S just produced may be discharged from clipping machine CM by discharge device 50.

For preventing damages to clipping machine CM, like by friction or wear, a lubrication procedure is executed, in which each lubricating fitting or lubricating point 102, 202 is provided with a certain amount of lubricant. The lubrication procedure may be executed according to a lubricating schedule, once before starting clipping machine CM, during the production process and/or after cleaning or maintaining clipping machine CM.

In particular, during the production process, load is applied to drivable components 100, 200 of clipping machine CM, which leads to increased wear and friction, and thus, a lubrication procedure is preferably executed during the production process, and in regular intervals, in order to ensure that drivable components 100, 200, and particularly lubrication fittings or lubricating points 102, 202 are provided with sufficient lubricant.

According to Fig. 2, control unit CU of clipping machine CM is connected via control cable SC1 with sensor unit SU1 of drive device 100. Sensor unit SU1 may determine a specific condition of drive device 300, like the power consumption or torque applied by drive device 300 to drivable components 100, 200. Upon receipt of a signal from sensor unit SU1, control unit CU of clipping machine CM may indicate specific conditions of drive unit 300, like an increased power consumption or an increased torque that indicates increased friction or wear in drivable components 100, 200.

Based on the signal received from sensor unit SU1 and the selected lubricating schedule, control unit CU may assess the next lubricating cycle. Dependent on the variation in the indicated condition of drive unit 300 or drivable components 100, 200, control unit CU may vary the interval between two subsequent lubricating events. Control unit CU of clipping machine CM, connected to lubricating device 400, particularly to lubricant pump 420, by control cable 402, may cause lubricating device 400 to execute an additional lubricating event. In particular, when determining a deterioration of the indicated condition, like an increase in friction, control unit CU may shorten the interval between the lubricating event just executed and the lubricating event occurring next. That means, control unit CU of clipping machine CM may cause lubricating device 400 to execute a lubricating event immediately and independent from the selected lubricating schedule. Alternatively, one of the subsequent intervals between two lubricating events may be shortened.

For varying the length of an interval between two subsequent lubricating events, control unit CU of clipping machine sends a respective signal via control cable 402 to activate lubricant pump 420 that executes a lubricating event. Thereafter, the selected lubricating schedule may be continued.

Upon receipt of said signal from control unit CU, lubricant pump 420 is activated, and a predefined amount of lubricant is fed to lubricant distributor 430, through which said lubricant is delivered via lubricant ports 432 and lubricant delivery pipes 434 to lubricating points 102, 202 of drivable components 102, 202.

Lubricant distributor 430 is designed such that predefined amounts of lubricant are fed through each lubricant port 432. Alternatively, lubricant distributor 430 may be designed such that the amount of lubricant fed through each lubricant port 432 may be adjusted, commonly for all lubricant ports 432 or separately for each lubricant port 432. Adjusting the amount of lubricant fed through each lubricant port 432 may be controlled by control unit CU, in order to vary the lubricating schedule.

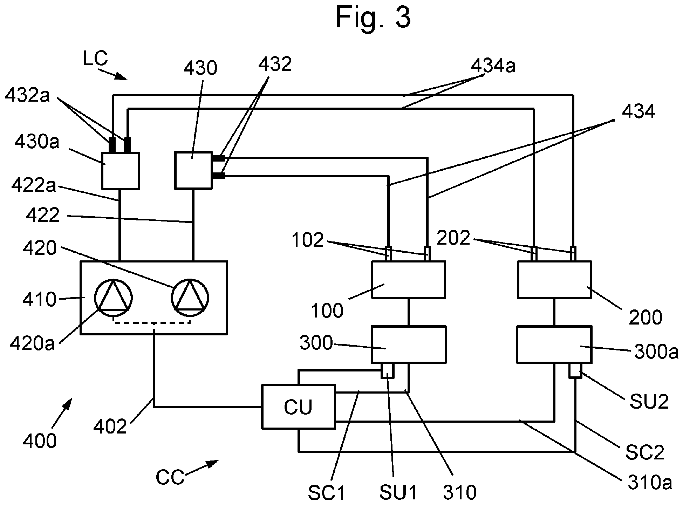

The second embodiment of clipping machine CM, shown in Fig. 3, differs from clipping machine CM of the first embodiment according to Fig. 2 in that lubrication cycle LC includes a lubricating device 400 having a first lubricant pump unit 420 and a second lubricant pump unit 420a, with lubricant pump units or lubricant pumps 420, 420a being coupled to a common lubricant supply 410, and a first lubricant distributor 430 and a second lubricant distributor 430a. First lubricant pump 420 is coupled first lubricant distributor 430 via lubricant pipe 422, and second lubricant pump 420a is coupled second lubricant distributor 430a via lubricant pipe 422a.

As further can be seen in Fig. 3, lubricant ports 432 of lubricant distributor 430 are connected to lubrication fittings or lubricating points 102 of first drivable component 100 of clipping machine CM by lubricating delivery pipes 434, whereas lubricant ports 432a of lubricant distributor 430a are connected to lubrication fittings or lubricating points 202 of second drivable component 200 of clipping machine CM by lubricating delivery pipes 434a.

Furthermore, first drivable component 100 is driven by drive device 300. A second drive device 300a is coupled to second drivable component 200, for driving second drivable component 200 independently from first drivable component 100. As explained in conjunction with the first embodiment of clipping machine CM according to Fig. 2, control unit CU of clipping machine CM is connected via control cable SC1 with first sensor unit SU1 of drive device 100. First sensor unit SU1 may determine a specific condition of drive device 300 or first drivable component 100, respectively. Second drive device 300a includes a second sensor unit SU2, which is connected with control unit CU of clipping machine CM via a second control cable SC2, and which may determine a specific condition of drive device 300a or second drivable component 200, respectively. Moreover, control unit CU of clipping machine CM is coupled to lubricating device 400 via control cable 402, via which control unit CU may control lubricant pumps 423, 420a separately and independent from each other, as indicated in dotted lines in lubricating device 400 in Fig. 3.

In the second embodiment of clipping machine CM, control unit CU may control lubrication circuit LC, and particularly, lubricating device 400 similar to the first embodiment, namely on the basis of signals received from sensor units SU1, SU2. Accordingly, the lubricating schedule applied to clipping machine CM may be varied in the manner explained in conjunction with Fig. 2.

However, due to the presence of two lubricant pumps 420, 420a, lubricant may separately and independently be supplied to lubricating points 102; 202 of first and second drivable components 100, 200 of clipping machine CM.

Dependent on the conditions of first and second drivable components 100, 200 indicated by first and second units SU1, SU2, different amounts of lubricant may be supplied to the lubricating points 102, 202 of first and second drivable components 100, 200. In the case that different load is applied to the different components 100, 200 of clipping machine CM, also the conditions indicated by sensor units SU1, SU2 may differ. Thus, it may be necessary to supply different amounts of lubricant to first and second drivable components 100, 200, or to supply lubricant at different time points, i.e. based on different lubricating schedules.

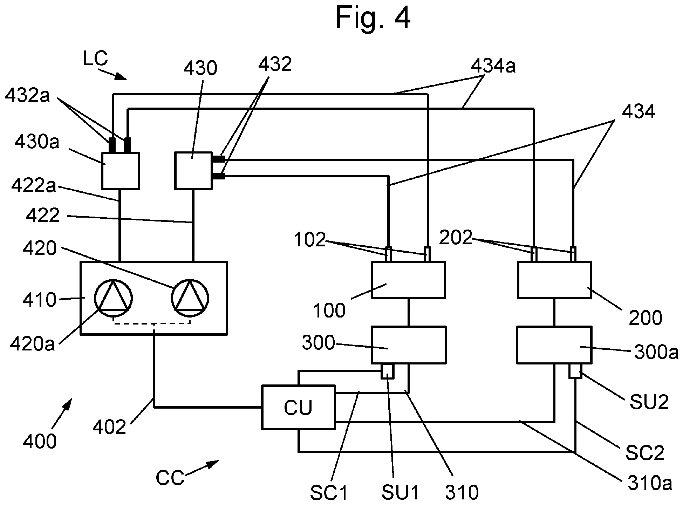

The third embodiment of clipping machine CM according to Fig. 4 is of similar design as the second embodiment of clipping machine CM of Fig. 3. Clipping machine CM according to Fig. 4 only differs from clipping machine CM of Fig. 3 by lubricant ports 432, 432a of lubricant distributors 430, 430a, from which one of lubricant ports 432 of first lubricant distributor 430 is connected to one of lubricating points 102 of first drivable component 100, whereas the respective other of lubricant port 432 is connected to one of lubricating points 202 of second drivable component 200. Accordingly, one of lubricating ports 432a of second lubricant distributor 430a is connected to the respective other lubricating point 102 of first drivable component 100, and the other of lubricating port 432a is connected to the other lubricating point 202 of second drivable component 200. That means, that one of lubricating points 102; 202 of first and second drivable components 100, 200 are supplied with lubricant by first lubricant pump 420, whereas lubricant is supplied to the respective other lubricating point 202; 102 of first and second component 100, 200 by second lubricant pump 420a.

As can be seen in Fig. 4, in this embodiment, lubricating points 102, 202 of different drivable components (components 100, 200) are arranged in different groups, e.g. according to their specific stress, as the load applied thereto.

In clipping machine CM of Fig. 4, the lubricating schedule may be varied as explained in conjunction with the embodiments of clipping machine CM of Figs. 2 and 3.

Additionally, according to the load applied to the bearings lubricated by lubricating points 102, 202, the specific conditions of drivable components 100, 200, and more particular, the specific conditions of the bearings, which may be different in the same drivable component, may be indicated more precisely. Thus, a lubricating schedule may also more precisely be adapted to these specific conditions, and different amounts of lubricant may be supplied to lubricating points 102, 202 of drivable component 100, 200.

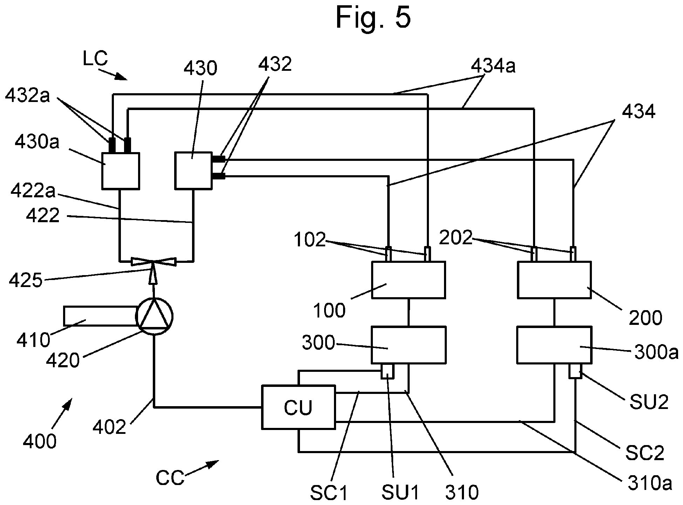

Fig. 5 shows a fourth embodiment of a lubricating circuity of clipping machine CM, that is of similar design as the lubricating circuity of the third embodiment of clipping machine CM of Fig. 4. Clipping machine CM according to Fig. 5 differs from clipping machine CM of Fig. 4 by lubricating device 400 that includes only one lubricant pump 420 to which lubricant supply 410 is coupled.

As further can be seen in Fig. 5, upstream lubricating device 400, between lubricant pump 420 and lubricant distributors 430, 430a, a switch valve 425 is arranged, which connects the outlet of lubricant pump 420 via lubricant pipe 422, 422a to first and second lubricant distributors 430, 430a.

Switch valve 425, in the embodiment of Fig. 5, is a three-way valve with an inlet to which lubricant pump 420 is coupled, and two outlets connected to first and second lubricant distributors 430, 430a, respectively. Switch valve 425 may be activated by hand or automatically, by a respective drive (not shown in Fig. 5), like an electric motor, which may be coupled to and controlled by control unit CU of clipping machine CM. In the letter case, the activation of switch valve 425 may be integrated into a lubricating schedule executed by control unit CU.

Similar to lubrication circuit LC of in Fig. 4, also in the fourth embodiment according to Fig. 5, lubricating points 102, 202 of different drivable components (components 100, 200) are arranged in different groups, e.g. according to their specific stress, as the load applied thereto.

For lubricating the different groups of lubricating points 102, 202, switch valve 425 is activated such that either first lubricant distributor 430 or second lubricant distributor 430a is connected to lubricant pump 420. Accordingly, the groups of lubricating points 102, 202 may subsequently be provided with lubricant.

Alternatively, switch valve 425 may be brought into a valve position, in which both, first and second lubricant distributors 430, 430a, are connected to lubricant pump 420. The valve position may be selected such that first and second lubricant distributors 430, 430a are provided with the same amount of lubricant, or first and second lubricant distributors 430, 430a are provided with different amounts of lubricant, e.g. dependent on the load applied to the respective components 100, 200.

It has to be understood that switch valve 425 may also be integrated into lubrication circuit LC according to the second embodiment shown in Fig. 3. Accordingly, also in the second embodiment, lubricating device 400 need to be equipped with only one lubricant pump 420.

In each of the above explained embodiments of clipping machine CM, control unit CU may further include analysing means for analysing a predefined number of sensor signals, e.g. in order to evaluate a trend in the development of the indicated condition of drive device 300; 300a or drivable components 100, 200 of clipping machine CM. Based on this evaluation, control unit CU may generally shorten all or some of the intervals between the lubricating events, or switch to a different lubricating schedule considering the evaluated variation or trend in the indicated condition of drive device 300; 300a or drivable components 100, 200 of clipping machine CM.

Further alternatively, for saving lubricant, control unit CM may also lengthen one or more intervals between subsequent lubricating events, or reduce the amount of lubricant per lubricating event. When further analysing the sensor signals from sensor unit SU1; SU2, and the evaluated trend in the indicated condition of drive device 300; 300a or drivable components 100, 200 of clipping machine CM does not show deteriorations in the indicated condition, the new intervals between the lubricating events or the reduced amount of lubricant may be maintained. This kind of variation of the lubricating schedule may be done during an optimization cycle that may be executed automatically by control unit CU of clipping machine CM, or by an operator that inputs a respective control command to control unit CM.

Clipping machine CM as explained in conjunction with Figs 2 to 5 has been described as including two drivable components 100, 200 commonly driven by drive device 300, or separately driven by drive devices 300, 300a. It has to be understood that clipping machine CM may include more than two drivable components, which are commonly driven by a single drive device, or which are separately driven, with each drivable component provided with its own drive device.

Furthermore, each drivable component of clipping machine CM may include only one, two or more than two lubricating points. Accordingly, only one group of lubricating points or more than two groups of lubricating points may be provided, with each group being coupled to its own lubricant distributor.

In addition to sensor units SU1, SU2 provided to drive devices 300, 300a, more sensor units may be arranged in clipping machine CM, for indicating conditions of drivable components of clipping machine CM. Particularly, sensor units may directly arranged on the drivable components of clipping machine CM, and close to the bearings or lubricating points, for precisely indicating the conditions of the drivable components.

Clipping machine CM includes lubrication circuit LC for providing lubricating points 102, 202 of components 100, 200 with lubricant, according to a lubricating schedule executed by control unit CU of clipping machine CM. However, clipping machine CM or their components 100, 200, may comprise lubricating points, which are located far away from lubricating device 400 or lubricant distributors 430, 430a, respectively. For integrating such lubricating points into lubrication circuit LC, the necessary length of respective delivery pipes may cause problems during the lubricating operation, such that these lubricating points e.g. are not provided with sufficient lubricant. Such lubricating points may be provided with a separate lubricating device, which may include a separate lubricant pump and a separate lubricant supply. In such a case, the lubricating device of these lubricating points may also be connected to and controlled by control unit CM of clipping machine CM. The lubricating operation of these lubricating points may be integrated into the lubricating schedule executed by control unit CM, coordinated with the lubricating operation of lubrication circuit LC.

In conjunction with the fourth embodiment of lubrication circuit LC, switch valve 425 has been described as a three-way valve, actuated manually or automatically. It has to be understood that switch valve 425 may also be realized by any other suitable valve or valve arrangement that is adapted to connect lubricant pump 420 to either one or both of lubricant distributors 430, 430a. Instead of switch valve 425, a valve arrangement in the connection between lubricant pump 425 and lubricant distributors 430, 430a may be realized by a manifold, like a wye junction, and two valves each coupled to one of lubricant pipes 422, 422a.

### Reference signs

- 10: filling tube
- 12: left end of the filling tube
- 14: right end of the filling tube
- 16: casing brake assembly
- 20: clipping device
- 22: first clipping tool
- 24: second clipping tool
- 30: gathering means
- 32: first displaver unit
- 34: second displacer unit
- 40: cutting device
- 50: discharge device
- 100: first drivable component
- 102: lubrication fitting
- 200: second drivable component
- 202: lubrication fitting
- 300: drive device
- 300a: second drive device
- 310: control cable
- 310a: control cable
- 400: lubricating device
- 402: control cable
- 410: lubricant supply
- 420: lubricant pump unit
- 420a: second lubricant pump unit
- 422: lubricant pipe
- 422a: lubricant pipe
- 430: lubricant distributor
- 430a: second lubricant distributor
- 432: lubricant port
- 432a: lubricant port
- 434: delivery pipes
- 434a: delivery pipes
- A: central axis of the filling tube
- C: closure clip
- CC: control circuit
- CM: clipping machine
- CU: control unit
- F: feeding direction
- L: suspension element
- LC: lubrication circuit
- M: tubular packaging casing
- P: plait-like portion
- S: sausage-shaped product
- SC1: control cable
- SC2: second control cable
- SU1: sensor unit
- SU2: second sensor unit
- T: transportation direction

## Claims

1. A clipping machine (CM) for producing sausage-shaped products (S) by filling a filling material into a tubular or bag-shaped packaging casing (M), having at least one first drivable component (100), at least one drive device (300, 300a) for driving said at least one first drivable component (100), a control unit (CU) for controlling the operation of said at least one drive device (300) of said at least one first drivable component (100, 200), and at least a first sensor unit (SU1) associated with the at least one first drivable component (100) and coupled to the control unit (CU), wherein the first sensor unit (SU1) is mounted to the drive device (300), for indicating specific operating conditions of the at least one first drivable component (100) by determining at least one specific condition of the drive device (300),
the clipping machine (CM) further comprises a lubricating device (400) including a supply (410) of lubricant and a pump unit (420), the lubricating device (400) being connected to at least one first lubricating point (102) of the at least one first drivable component (100) of the clipping machine (CM), by a lubricating pipe (422, 434) through which lubricant is delivered to the at least one first lubricating point (102) by the pump unit (420);
the lubricating device (400) being controlled by the control unit (CU),
wherein the control unit (CU) is adapted to operate the lubricating device (400) according to a predefined lubricating schedule for executing lubricating events to the at least one first drivable component (100); and
wherein the control unit (CU) is adapted to vary the lubricating schedule upon a signal of the first sensor unit (SU1) indicating specific operating conditions of the at least one first drivable component (100).

2. The clipping machine (CM) according to claim 1,
wherein the lubricating schedule includes lubricating events in predefined intervals, and wherein the control unit (CU) is adapted to vary the length of at least one interval between two subsequent lubricating events.

3. The clipping machine (CM) according to claim 2,
wherein the control unit (CU) is adapted to shorten the length of the interval between the previous lubricating event and the next lubricating event to be executed.

4. The clipping machine (CM) according to any of claims 1 to 3,
wherein the control unit (CU) is adapted to analyse the signals received from the sensor unit (SU1), and to vary the lubricating schedule based on this analysis.

5. The clipping machine (CM) according to any of claims 1 to 4,
wherein the control unit (CU) is adapted to switch to an alternative lubricating schedule.

6. The clipping machine (CM) according to any of claims 1 to 5,
further comprising at least a second drivable component (200) having at least one second lubricating point (202) coupled to the lubricating device (400) by a lubricating pipe (422a, 434a), and further at least a second sensor unit (SU2) associated with the at least one second drivable component (200),
wherein the control unit (CU) is adapted to vary the lubricating schedule of one or all drivable components (100, 200), upon a signal one or all of the sensor units (SU1, SU2) indicating specific operating conditions of said drivable components (100, 200).

7. The clipping machine (CM) according to any of claims 1 to 6,
wherein at least one of the drivable components (100, 200) of the clipping machine (CM), has more than one lubricating point (102, 202), and wherein the control unit (CU) is adapted to controll the lubricating device (400) to lubricate the lubricating points (102, 202) of the at least one of the drivable components (100, 200) according to different lubricating schedules.

8. The clipping machine (CM) according to claim 7,
wherein the lubricating points (102, 202) of the drivable components (100, 200) are arranged in groups, and wherein the control unit (CU) is adapted to control the lubricating device (400) to lubricate the groups of lubricating points (102, 202) according to different lubricating schedules.

9. A method for controlling a clipping machine (CM) for producing sausage-shaped products (S) by filling a filling material into a tubular or bag-shaped packaging casing (M), having at least one first drivable component (100), at least one drive device (300) for driving said at least one first drivable component (100), a control unit (CU) for controlling the operation of said at least one first drivable component (100), at least a first sensor unit (SU1) associated with the at least one first drivable component (100) and coupled to the control unit (CU), wherein the first sensor unit (SU1) is mounted to the drive device (300), for indicating specific operating conditions of the at least one first drivable component (100) by determining at least one specific condition of the drive device (300), and a lubricating device (400) including a supply (410) of lubricant and a pump unit (420), the lubricating device (400) being connected to at least one first lubricating point (102) of the at least one first drivable component (100) of the clipping machine (CM) by a lubricating pipe (422, 434) through which lubricant is delivered to the first lubricating point (102) by the pump unit (420);
the method comprises the steps of:
- controlling by the control unit (CU) the lubricating device (400);
- operating by the control unit (CU) the lubricating device (400) according to a predefined lubricating schedule; and
- varying by the control unit (CU) the lubricating schedule upon a signal of the sensor unit (SU1) indicating specific operating conditions of the at least one first drivable component (100).

10. The method according to claim 9,
wherein the lubricating schedule includes lubricating events in predefined intervals, the method further comprises the step of:
- varying by the control unit (CU) the length of at least one interval between two subsequent lubricating events.

11. The method according to claim 9 or 10, further comprising the step of:
- shorten by the control unit (CU) the length of the interval between the previous lubricating event and the next lubricating event to be executed.

12. The method according to any of claims 9 to 11, further comprising the step of:
- analysing by the control unit (CU) the signals received from the sensor unit (SU1) and varying the lubricating schedule on the basis of this analysis.

13. The method according to any of claims 9 to 12, further comprising the step of:
- switching by the control unit (CU) to an alternative lubricating schedule.

14. The method according to any of claims 9 to 13,
wherein the clipping machine (CM) further comprising at least a second drivable component (200) with at least one second lubricating point (202) coupled to the lubricating device (400) by a lubricating pipe (422a, 434a), and further at least a second sensor unit (SU2) associated with the at least one second drivable component (200),
the method further comprising the step of:
- varying by the control unit (CU) the lubricating schedule of one or all drivable components (100, 200), upon a signal of one or all of the sensor units (SU1, SU2) indicating specific operating conditions of said drivable components (100, 200).

15. The method according to claim 14,
wherein the lubricating points (102, 202) of the drivable components (100, 200) are arranged in groups,
the method further comprising the step of:
- lubricating the groups of lubricating points (102, 202) according to different lubricating schedules.

## Patentansprüche

1. Clipmaschine (CM) zur Herstellung von wurstförmigen Produkten (S) durch Füllen eines Füllmaterials in eine schlauchförmige oder beutelförmige Verpackungshülle (M), aufweisend mindestens eine erste antreibbare Komponente (100), mindestens eine Antriebseinrichtung (300, 300a) zum Antreiben der mindestens einen ersten antreibbaren Komponente (100), eine Steuereinheit (CU) zum Steuern des Betriebs der mindestens einen Antriebseinrichtung (300) der mindestens einen ersten antreibbaren Komponente (100, 200), und mindestens eine erste Sensoreinheit (SU1), die der mindestens einen ersten antreibbaren Komponente (100) zugeordnet ist und mit der Steuereinheit (CU) gekoppelt ist, wobei die erste Sensoreinheit (SU1) an der Antriebseinrichtung (300) angebracht ist, spezifische Betriebszustände der mindestens einen ersten antreibbaren Komponente (100) anzuzeigen durch Bestimmen mindestens eines spezifischen Zustands der Antriebseinrichtung (300),
wobei die Clipmaschine (CM) ferner eine Schmiervorrichtung (400) umfasst, die einen Vorrat (410) von Schmierstoff und eine Pumpeneinheit (420) umfasst, wobei die Schmiervorrichtung (400) mit mindestens einem ersten Schmierpunkt (102) der mindestens einen ersten antreibbaren Komponente (100) der Clipmaschine (CM) durch eine Schmierleitung (422, 434) verbunden ist, durch die von der Pumpeneinheit (420) Schmierstoff zu dem mindestens einen ersten Schmierpunkt (102) gefördert wird;
wobei die Schmiervorrichtung (400) von der Steuereinheit (CU) gesteuert wird,
wobei die Steuereinheit (CU) dazu eingerichtet ist, die Schmiervorrichtung (400) gemäß einem vordefinierten Schmierplan zu betreiben, um Schmierereignisse an der mindestens einen ersten antreibbaren Komponente (100) auszuführen; und
wobei die Steuereinheit (CU) dazu eingerichtet ist, aufgrund eines Signals der ersten Sensoreinheit (SU1), das spezifische Betriebszustände der mindestens einen ersten antreibbaren Komponente (100) anzeigt, den Schmierplan zu variieren.

2. Clipmaschine (CM) gemäß Anspruch 1,
wobei der Schmierplan Schmierereignisse in vordefinierten Intervallen aufweist, und wobei die Steuereinheit (CU) dazu eingerichtet ist, die Länge von mindestens einem Intervall zwischen zwei aufeinanderfolgenden Schmierereignissen zu variieren.

3. Clipmaschine (CM) gemäß Anspruch 2,
wobei die Steuereinheit (CU) dazu eingerichtet ist, die Länge des Intervalls zwischen dem vorhergehenden Schmierereignis und dem nächsten auszuführenden Schmierereignis zu verkürzen.

4. Clipmaschine (CM) gemäß einem der Ansprüche 1 bis 3,
wobei die Steuereinheit (CU) dazu eingerichtet ist, die von der Sensoreinheit (SU1) empfangenen Signale zu analysieren, und basierend auf dieser Analyse den Schmierplan zu variieren.

5. Clipmaschine (CM) gemäß einem der Ansprüche 1 bis 4,
wobei die Steuereinheit (CU) dazu eingerichtet ist, zu einem alternativen Schmierplan zu wechseln.

6. Clipmaschine (CM) gemäß einem der Ansprüche 1 bis 5,
ferner umfassend mindestens eine zweite antreibbare Komponente (200), die mindestens einen zweiten Schmierpunkt (202) aufweist, der mit der Schmiervorrichtung (400) über eine Schmierstoffleitung (422a, 434a) verbunden ist, und ferner mindestens eine zweite Sensoreinheit (SU2), die der mindestens einen zweiten antreibbaren Komponente (200) zugeordnet ist,
wobei die Steuereinheit (CU) dazu eingerichtet ist, den Schmierplan einer oder aller antreibbaren Komponenten (100, 200) zu variieren, aufgrund eines Signals einer oder aller Sensoreinheiten (SU1, SU2), das spezifische Betriebsbedingungen der antreibbaren Komponenten (100, 200) anzeigen.

7. Clipmaschine (CM) gemäß einem der Ansprüche 1 bis 6,
wobei mindestens eine der antreibbaren Komponenten (100, 200) der Clipmaschine (CM) mehr als einen Schmierpunkt (102, 202) aufweist, und wobei die Steuereinheit (CU) dazu eingerichtet ist, die Schmiervorrichtung (400) so zu steuern, dass die Schmierpunkte (102, 202) der mindestens einen antreibbaren Komponente (100, 200) gemäß unterschiedlichen Schmierplänen geschmiert werden.

8. Clipmaschine (CM) gemäß Anspruch 7,
wobei die Schmierpunkte (102, 202) der antreibbaren Komponenten (100, 200) in Gruppen angeordnet sind, und wobei die Steuereinheit (CU) dazu eingerichtet ist, die Schmiervorrichtung (400) so zu steuern, dass die Gruppen von Schmierpunkten (102, 202) gemäß unterschiedlichen Schmierplänen geschmiert werden.

9. Verfahren zum Steuern einer Clipmaschine (CM) zur Herstellung von wurstförmigen Produkten (S) durch Füllen eines Füllmaterials in eine schlauchförmige oder beutelförmige Verpackungshülle (M), aufweisend mindestens eine erste antreibbare Komponente (100), mindestens eine Antriebseinrichtung (300) zum Antreiben der mindestens einen ersten antreibbaren Komponente (100), eine Steuereinheit (CU) zum Steuern des Betriebs der mindestens einen ersten antreibbaren Komponente (100), mindestens eine erste Sensoreinheit (SU1), die der mindestens einen ersten antreibbaren Komponente (100) zugeordnet ist und mit der Steuereinheit (CU) gekoppelt ist, wobei die erste Sensoreinheit (SU1) an der Antriebseinrichtung (300) angebracht ist, um spezifische Betriebszustände der mindestens einen ersten antreibbaren Komponente (100) anzuzeigen durch Bestimmen mindestens eines spezifischen Zustands der Antriebseinrichtung (300), und eine Schmiervorrichtung (400), die einen Vorrat (410) von Schmierstoff und eine Pumpeneinheit (420) aufweist, wobei die Schmiervorrichtung (400) mit mindestens einem ersten Schmierpunkt (102) der mindestens einen ersten antreibbaren Komponente (100) der Clipmaschine (CM) über eine Schmierstoffleitung (422, 434) verbunden ist, durch die von der Pumpeneinheit (420) Schmierstoff zu dem ersten Schmierpunkt (102) gefördert wird;
wobei das Verfahren die Schritte umfasst:
- Steuern der Schmiervorrichtung (400) durch die Steuereinheit (CU);
- Betreiben der Schmiervorrichtung (400) durch die Steuereinheit (CU) gemäß einem vordefinierten Schmierplan; und
- Variieren des Schmierplans durch die Steuereinheit (CU) aufgrund eines Signals der Sensoreinheit (SU1), das spezifische Betriebszustände der mindestens einen ersten antreibbaren Komponente (100) anzeigt.

10. Verfahren gemäß Anspruch 9,
wobei der Schmierplan Schmierereignisse in vordefinierten Intervallen aufweist, und wobei das Verfahren ferner den Schritt umfasst:
- Variieren der Länge von mindestens einem Intervall zwischen zwei aufeinanderfolgenden Schmierereignissen.

11. Verfahren gemäß einem der Ansprüche 9 oder 10, ferner den Schritt umfassend:
- Kürzen der Länge des Intervalls zwischen dem vorhergehenden Ereignis und dem nächsten auszuführenden Schmierereignis.

12. Verfahren gemäß einem der Ansprüche 9 bis 11, ferner den Schritt umfassend:
- Analysieren des von der Sensoreinheit (SU1) empfangenen Signals durch die Steuereinheit (CU) und Variieren des Schmierplans basierend auf dieser Analyse.

13. Verfahren gemäß einem der Ansprüche 9 bis 12, ferner den Schritt umfassend:
- Wechseln zu einem alternativen Schmierplan durch die Steuereinheit (CU).

14. Verfahren gemäß einem der Ansprüche 9 bis 13,
wobei die Clipmaschine (CM) ferner mindestens eine zweite antreibbare Komponente (200) umfasst, die mindestens einen zweiten Schmierpunkt (202) aufweist, der über eine Schmierstoffleitung (422a, 434a) mit der Schmiervorrichtung (400) verbunden ist, und ferner mindestens eine zweite Sensoreinheit (SU2), die mit der mindestens einen zweiten antreibbaren Komponente (200) verbunden ist,
wobei das Verfahren ferner den Schritt umfasst:
- Variieren des Schmierplans einer oder aller antreibbaren Komponenten (100, 200) durch die Steuereinheit (CU) aufgrund eines Signals einer oder aller Sensoreinheiten (SU1, SU2), das spezifische Betriebszustände der antreibbaren Komponenten (100, 200) anzeigt.

15. Verfahren gemäß Anspruch 14,
wobei die Schmierpunkte (102, 202) der antreibbaren Komponenten (100, 200) in Gruppen angeordnet sind;
wobei das Verfahren ferner den Schritt umfasst:
- Schmieren der Gruppen von Schmierpunkten (102, 202) gemäß unterschiedlichen Schmierplänen.

## Revendications

1. Machine d'agrafage (CM) destinée à produire des produits en forme de saucisse (S) par remplissage d'un matériau de remplissage dans une enveloppe d'emballage (M) tubulaire ou en forme de sac, présentant au moins un premier composant pouvant être entraîné (100), au moins un dispositif d'entraînement (300, 300a) destiné à entraîner ledit au moins un premier composant pouvant être entraîné (100), une unité de commande (CU) destinée à commander le fonctionnement dudit au moins un dispositif d'entraînement (300) dudit au moins un premier composant pouvant être entraîné (100, 200) et au moins une première unité de capteur (SU1) associée audit au moins un premier composant pouvant être entraîné (100) et accouplée à l'unité de commande (CU), la première unité de capteur (SU1) étant montée sur le dispositif d'entraînement (300) afin d'indiquer des conditions de fonctionnement spécifiques dudit au moins un premier composant pouvant être entraîné (100) par détermination d'au moins un état spécifique du dispositif d'entraînement (300),
la machine d'agrafage (CM) comprenant en outre un dispositif de lubrification (400) comprenant une alimentation (410) en lubrifiant et une unité de pompe (420), le dispositif de lubrification (400) étant relié à au moins un premier point de lubrification (102) dudit au moins un premier composant pouvant être entraîné (100) de la machine d'agrafage (CM) par un tuyau de lubrification (422, 434) à travers lequel un lubrifiant est fourni audit au moins un premier point de lubrification (102) par l'unité de pompe (420) ;
le dispositif de lubrification (400) étant commandé par l'unité de commande (CU),
l'unité de commande (CU) étant conçue pour faire fonctionner le dispositif de lubrification (400) selon un programme de lubrification prédéfini afin d'exécuter des événements de lubrification sur ledit au moins un premier composant pouvant être entraîné (100) ; et
l'unité de commande (CU) étant conçue pour faire varier le programme de lubrification sur un signal de la première unité de capteur (SU1) indiquant des conditions de fonctionnement spécifiques dudit au moins un premier composant pouvant être entraîné (100).

2. Machine d'agrafage (CM) selon la revendication 1,
le programme de lubrification comprenant des événements de lubrification dans des intervalles prédéfinis et l'unité de commande (CU) étant conçue pour faire varier la longueur d'au moins un intervalle entre deux événements de lubrification subséquents.

3. Machine d'agrafage (CM) selon la revendication 2,
l'unité de commande (CU) étant conçue pour raccourcir la longueur de l'intervalle entre l'événement de lubrification précédent et l'événement de lubrification suivant à exécuter.

4. Machine d'agrafage (CM) selon l'une quelconque des revendications 1 à 3,
l'unité de commande (CU) étant conçue pour analyser les signaux reçus depuis l'unité de capteur (SU1) et pour faire varier le programme de lubrification sur la base de cette analyse.

5. Machine d'agrafage (CM) selon l'une quelconque des revendications 1 à 4,
l'unité de commande (CU) étant conçue pour commuter vers un programme de lubrification alternatif.

6. Machine d'agrafage (CM) selon l'une quelconque des revendications 1 à 5,
comprenant en outre au moins un deuxième composant pouvant être entraîné (200) présentant au moins un deuxième point de lubrification (202) accouplé au dispositif de lubrification (400) par un tuyau de lubrification (422a, 434a) et en outre au moins une deuxième unité de capteur (SU2) associée audit au moins un deuxième composant pouvant être entraîné (200),
l'unité de commande (CU) étant conçue pour faire varier le programme de lubrification d'un ou de tous les composants pouvant être entraînés (100, 200) sur un signal d'une ou de toutes les unités de capteur (SU1, SU2) indiquant des conditions de fonctionnement spécifiques desdits composants pouvant être entraînés (100, 200).

7. Machine d'agrafage (CM) selon l'une quelconque des revendications 1 à 6,
au moins l'un des composants pouvant être entraînés (100, 200) de la machine d'agrafage (CM) présentant plus d'un point de lubrification (102, 202) et l'unité de commande (CU) étant conçue pour commander le dispositif de lubrification (400) afin de lubrifier les points de lubrification (102, 202) dudit au moins l'un des composants pouvant être entraînés (100, 200) selon différents programmes de lubrification.

8. Machine d'agrafage (CM) selon la revendication 7,
les points de lubrification (102, 202) des composants pouvant être entraînés (100, 200) étant agencés en groupes et l'unité de commande (CU) étant conçue pour commander le dispositif de lubrification (400) afin de lubrifier les groupes de points de lubrification (102, 202) selon différents programmes de lubrification.

9. Procédé de commande d'une machine d'agrafage (CM) destinée à produire des produits en forme de saucisse (S) par remplissage d'un matériau de remplissage dans une enveloppe d'emballage (M) tubulaire ou en forme de sac, présentant au moins un premier composant pouvant être entraîné (100), au moins un dispositif d'entraînement (300) destiné à entraîner ledit au moins un premier composant pouvant être entraîné (100), une unité de commande (CU) destinée à commander le fonctionnement dudit au moins un premier composant pouvant être entraîné (100), au moins une première unité de capteur (SU1) associée audit au moins un premier composant pouvant être entraîné (100) et accouplée à l'unité de commande (CU), la première unité de capteur (SU1) étant montée sur le dispositif d'entraînement (300) afin d'indiquer des conditions de fonctionnement spécifiques dudit au moins un premier composant pouvant être entraîné (100) par détermination d'au moins un état spécifique du dispositif d'entraînement (300) et un dispositif de lubrification (400) comprenant une alimentation (410) en lubrifiant et une unité de pompe (420), le dispositif de lubrification (400) étant relié à au moins un premier point de lubrification (102) dudit au moins un premier composant pouvant être entraîné (100) de la machine d'agrafage (CM) par un tuyau de lubrification (422, 434) à travers lequel un lubrifiant est fourni au premier point de lubrification (102) par l'unité de pompe (420) ;
le procédé comprenant les étapes de :
- commande par l'unité de commande (CU) du dispositif de lubrification (400) ;
- fonctionnement par l'unité de commande (CU) du dispositif de lubrification (400) selon un programme de lubrification prédéfini ; et
- variation par l'unité de commande (CU) du programme de lubrification sur un signal de l'unité de capteur (SU1) indiquant des conditions de fonctionnement spécifiques dudit au moins un premier composant pouvant être entraîné (100).

10. Procédé selon la revendication 9,
le programme de lubrification comprenant des événements de lubrification dans des intervalles prédéfinis, le procédé comprenant en outre l'étape de :
- variation par l'unité de commande (CU) de la longueur d'au moins un intervalle entre deux événements de lubrification subséquents.

11. Procédé selon la revendication 9 ou 10, comprenant en outre l'étape de :
- raccourcissement par l'unité de commande (CU) de la longueur de l'intervalle entre l'événement de lubrification précédent et l'événement de lubrification suivant à exécuter.

12. Procédé selon l'une quelconque des revendications 9 à 11, comprenant en outre l'étape de :
- analyse par l'unité de commande (CU) des signaux reçus depuis l'unité de capteur (SU1) et variation du programme de lubrification sur la base de cette analyse.

13. Procédé selon l'une quelconque des revendications 9 à 12, comprenant en outre l'étape de :
- commutation par l'unité de commande (CU) vers un programme de lubrification alternatif.

14. Procédé selon l'une quelconque des revendications 9 à 13,
la machine d'agrafage (CM) comprenant en outre au moins un deuxième composant pouvant être entraîné (200) présentant au moins un deuxième point de lubrification (202) accouplé au dispositif de lubrification (400) par un tuyau de lubrification (422a, 434a) et en outre au moins une deuxième unité de capteur (SU2) associée audit au moins un deuxième composant pouvant être entraîné (200),
le procédé comprenant en outre l'étape de :
- variation par l'unité de commande (CU) du programme de lubrification d'un ou de tous les composants pouvant être entraînés (100, 200), sur un signal d'une ou de toutes les unités de capteur (SU1, SU2) indiquant des conditions de fonctionnement spécifiques desdits composants pouvant être entraînés (100, 200).

15. Procédé selon la revendication 14,
les points de lubrification (102, 202) des composants pouvant être entraînés (100, 200) étant agencés en groupes,
le procédé comprenant en outre l'étape de :
- lubrification des groupes de points de lubrification (102, 202) selon différents programmes de lubrification.
